# EUROPÄISCHE PATENTSCHRIFT

(11) **EP 1 566 233 B1**
(45) Veröffentlichungstag und Bekanntmachung des Hinweises auf die Patenterteilung: **09.04.2014**
(21) Anmeldenummer: 05003354.7
(22) Anmeldetag: 17.02.2005
(51) Int. Cl.: B23K 20/10

(54) **Verwendung einer Sonotrode einer Ultraschall-Schweissvorrichtung**
Use of a sonotrode of an Ultrasonic bonding device
Utilisation d'une sonotrode d'un dispositif de soudage par ultrasons

(30) Priorität: 23.02.2004 DE 102004009048
(43) Veröffentlichungstag der Anmeldung: 24.08.2005
(73) Patentinhaber: SCHUNK Ultraschalltechnik GmbH, 35435 Wettenberg (DE)
(72) Erfinder: Stroh, Dieter, 35435 Wettenberg (DE); Dieterle, Horst, 35096 Niederweimar (DE); Wagenbach, Udo, 35418 Buseck (DE)
(74) Vertreter: Stoffregen, Hans-Herbert

(56) Entgegenhaltungen:
- FR-A- 1 285 323
- US-A- 5 603 444

## Beschreibung

Die Erfindung bezieht sich auf die Verwendung einer eine Längsachse und senkrecht zu dieser verlaufenden Querachse aufweisenden Sonotrode einer Ultraschallschweißvorrichtung mit zwei gegenüberliegenden Stirnflächen, die mit einer Halterung, einem Booster oder einem Konverter der Ultraschallschweißvorrichtung verbindbar sind, sowie zwei zwischen den Stirnflächen in Bezug auf die Längsachse der Sonotrode diametral gegenüberliegenden Seiten verlaufenden Flächen, von denen eine durch Drehen der Sonotrode um ihre Längsachse auf eine Gegenelektrode der Ultraschallschweißvorrichtung ausgerichtet wird, zwischen denen ein zu verschweißendes Gut anordbar ist.

Aus der EP-A-0 083 707 ist eine Ultraschall-Schweißvorrichtung mit Werkzeugen bekannt, die eine Sonotrode mit vier Arbeitsflächen und einen Amboss mit vier Arbeitsflächen umfasst. Dabei können sowohl die Sonotrode als auch der Amboss um ihre bzw. seine jeweilige Längsachse gedreht werden, um ein Ausrichten von Arbeitsflächen auf Verdichtungsräume unterschiedlicher Querschnitte zu ermöglichen.

Sowohl aus der EP-A-0 286 975 als auch der US-A-4,782,990 sind Ultraschallschweißvorrichtungen bekannt, bei denen die Gegenelektrode um 180° umsetzbar ist, um verschiedene Arbeitsflächen, die einen Verdichtungsraum begrenzen, zur Verfügung zu stellen.

Eine Ultraschallschweißvorrichtung nach der EP-B-0 723 713 umfasst eine Ultraschallschwingungen erzeugende Sonotrode, von der ein Abschnitt eine erste als Arbeitsfläche dienende Begrenzungsfläche eines in Höhe und Breite verstellbaren im Querschnitt vorzugsweise rechteckförmigen stirnseitig offenen Verdichtungsraums ist. Die übrigen Begrenzungs- oder Arbeitsflächen werden durch Abschnitte einer mehrteiligen Gegenelektrode sowie eines Seitenschiebers gebildet.

Aus der EP-B-0 761 370 (= US-A-5,603,444) ist eine Ultraschallschweißvorrichtung bekannt, bei der gegenüberliegende Stirnflächen der Sonotrode jeweils mit einem Booster verbunden sind. Die Länge der Sonotrode entspricht der Wellenlänge λ der Ultraschallwellen. Im Schwingungsbauch der Sonotrode, die eine Zylinderform aufweist, sind mehrere Arbeitsflächen bildende Vorsprünge vorhanden. Um jeweils eine der Arbeitsflächen auf eine Gegenelektrode - auch Amboss genannt - auszurichten, muss die Sonotrode um ihre Längsachse gedreht werden.

In der WO-A-02/43915 wird eine Ultraschallschweißvorrichtung beschrieben, bei der ein Seitenschieber einen Verdichtungsraum begrenzt. Der Seitenschieber weist mehrere Arbeitsflächen auf. Um eine der Arbeitsflächen auf einen Verdichtungsraum auszurichten, ist der Seitenschieber dreh- und/oder wendbar.

Der vorliegenden Erfindung liegt die Aufgabe zu Grunde, eine Sonotrode einer Ultraschallschweißvorrichtung so zu verwenden, dass die Sonotrode eine optimale Nutzung ihrer zum Schweißen benötigten Flächen ermöglicht. Zur Lösung der Aufgabe sieht die Erfindung die Verwendung nach Anspruch 1 vor.

Abweichend vom vorbekannten Stand der Technik weist eine Ultraschall-Schweißvorrichtung ein Werkzeug, insbesondere eine Sonotrode, auf, das bzw. die nicht nur um die Längsachse, sondern auch um seine bzw. ihre senkrecht hierzu verlaufende Querachse gedreht wird. Hierdurch ergibt sich eine optimale Nutzung der Arbeitsflächen, wobei quasi eine Arbeitsfläche die Funktion von zwei Arbeitsflächen ausübt.

Eine optimale Nutzung jeder Arbeitsfläche wird dadurch erreicht, dass diese durch Umsetzen der Sonotrode gleichmäßig abgenutzt wird, wodurch höhere Standzeiten der Sonotrode erzielbar sind.

Mit anderen Worten wird erfindungsgemäß eine Arbeitsfläche als zwei Arbeitsflächen genutzt.

Insbesondere besteht die Sonotrode aus die Stirnflächen aufweisenden zylindrischen Endabschnitten und zwischen diesen verlaufendem Mittelabschnitt, wobei sich der Mittelabschnitt aus zu einer die Arbeitsflächen schneidenden Ebene symmetrisch verlaufenden äußeren ersten und inneren zweiten trapezoidfömigen Abschnitten und von den zweiten trapezoidförmigen Abschnitten begrenztem quaderförmigen Innenabschnitt zusammensetzt, von dem die Arbeitsflächen ausgehen.

Dabei nimmt der Mittelabschnitt ausgehend von dem Endabschnitt in seiner Höhe zu den diametral gegenüberliegenden Arbeitsflächen hin zu.

Die Geometrie des quaderförmigen Innenabschnitts ist derart gewählt, dass jeweilige über Umfangsflächen sowohl der Endabschnitte als auch der trapezoidfönnigen Abschnitte vorstehende Stirnfläche des quaderförmigen Innenabschnitts erste bzw. zwei zweite Arbeitsflächen sind.

Zumindest eine Stirnfläche der Sonotrode ist vorzugsweise mit einem Booster der Ultraschallschweißvorrichtung verbunden. Alternativ besteht jedoch auch die Möglichkeit, dass eine der Stirnflächen mit einem Konverter und die andere Stirnfläche mit einem Booster verbunden ist. Als weitere Alternative ist in Betracht zu ziehen, dass jeweilige Stirnfläche mit einem Konverter verbunden ist.

Sofern die Stirnflächen mit jeweils einem Konverter verbunden sind, weist die Sonotrode vorzugsweise eine Länge von 3/2 λ mit λ = Wellenlänge der Ultraschallschwingung auf, so dass eine gleichsinnige Leistungseinbringung über die Konverter erfolgen kann. Wird eine Sonotrode einer Länge λ eingesetzt, so werden die elektrischen Signale der Konverter gespiegelt.

Es zeigen:
- Fig. 1: eine Sonotrode einer Ultraschallschweißvorrichtung,
- Fig. 2: eine Stirnansicht einer Gegenelektrode,
- Fig. 3: eine Seitenansicht der Gegenelektrode gemäß Fig. 2,
- Fig. 4: eine Prinzipdarstellung einer Ultraschallschweißvorrichtung und
- Fig. 5: einen Ausschnitt aus der Fig. 4.

In den Figuren sind Werkzeuge in Form einer Sonotrode und einer Gegenelektrode einer Ultraschallschweißvorrichtung rein prinzipiell dargestellt, um metallisches Gut wie Litzen oder Rohre verdichten und verschweißen bzw. Abschnitte von diesen abtrennen zu können. Die Gegenelektrode fällt nicht unter die erfindungsgemäße Lehre.

Bei der Ultraschallschweißvorrichtung handelt es sich um solche hinreichend bekannter Konstruktion, die als wesentliche Bestandteile neben einer Steuerung einen Generator, einen Konverter, eine Sonotrode, über die Ultraschallschwingungen auf das zu verdichtende bzw. zu verschweißende Gut übertragen werden, sowie Gegenelektrode umfasst. Sonotrode und Gegenelektrode können Abschnitte eines stirnseitig offenen Verdichtungsraumes sein. Fehlende Begrenzungsflächen werden von Seitenelementen gebildet, von denen zumindest eines verschiebbar sein sollte. Zwischen Konverter und Sonotrode kann ein Booster geschaltet sein, um eine Schwingungsverstärkung zu erreichen. Prinzipielle Aufbauten von Ultraschallschweißvorrichtungen und deren Funktionen sind der DE. Z.: Die Bibliothek der Technik, Bd. 108, Ultraschall-Metallschweißen, verlag moderne industrie, Landsberg/Lech, 1985, zu entnehmen, auf deren Inhalt ausdrücklich verwiesen und Bezug genommen wird.

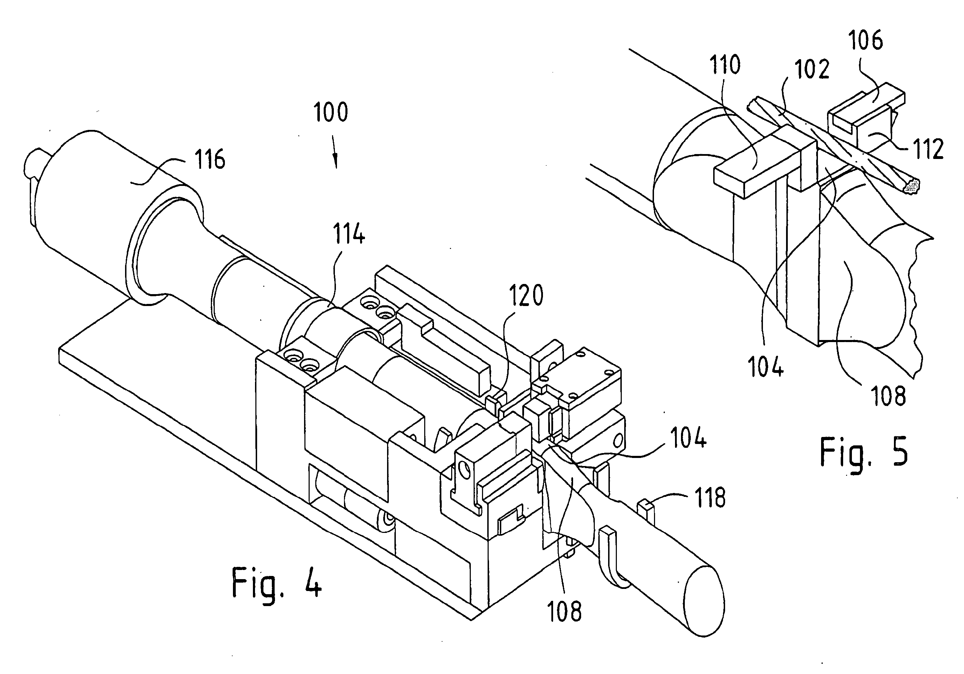

Rein beispielhaft ist in den Fig. 4 und 5 eine Ultraschallschweißvorrichtung 100 bzw. ein Ausschnitt dieser dargestellt, mit der zum Beispiel Litzen 102 verschweißt werden sollen. Hierzu werden die Litzen 102 in einen Verdichtungsraum 104 eingebracht. Der Verdichtungsraum 104 wird von Arbeits- oder Schweißflächen eines Ambosses 106 und einer Sonotrode 108, einem Seitenschieber 110 sowie einer Führung 112 für den Amboss 106 begrenzt.

Führung 112, Amboss 106 und Seitenschieber 110 sind dabei derart zueinander verstellbar, dass der Verdichtungsraum 104 in seinem Querschnitt auf den der zu verschweißenden Litzen 102 einstellbar ist. Insoweit wird auf hinlänglich bekannte Konstruktionen verwiesen, wie diese beispielhaft in der EP-B-0 723 713 beschrieben ist.

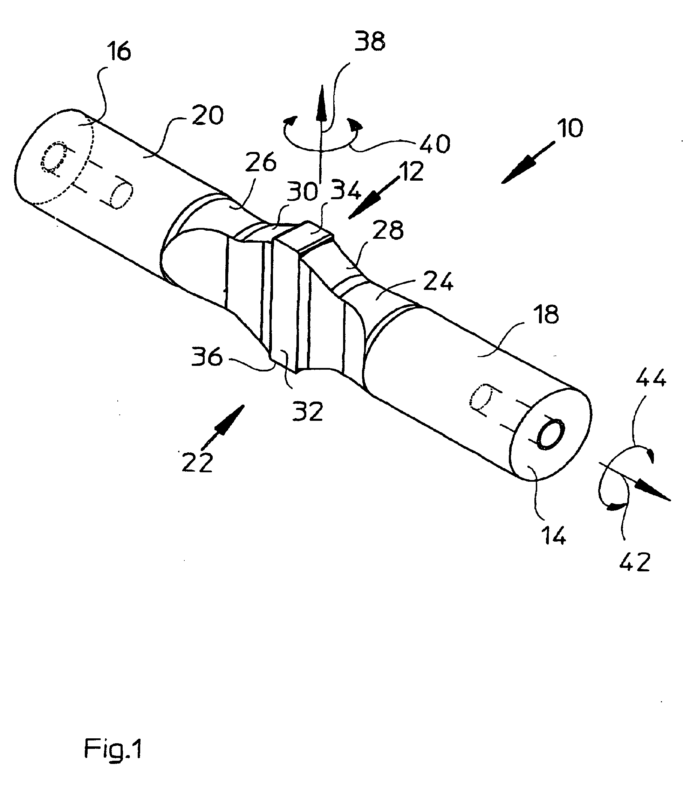

Die Sonotrode 108, die nachstehend im Zusammenhang mit der Fig. 1 näher erläutert und in dieser mit dem Bezugszeichen 10 gekennzeichnet ist, ist über einen Booster 114 mit einem Konverter 116 verbunden. Die Sonotrode 108 ist in Schwingungsknoten gelagert. Die entsprechenden Lagerungen sind mit den Bezugszeichen 118 und 120 gekennzeichnet. Die Arbeitsfläche der Sonotrode 108, die den Verdichtungsraum 104 begrenzt, verläuft im Schwingungsbauch der Sonotrode 108.

Wie die Fig. 1 verdeutlicht, weist die detailliert dargestellte Sonotrode 10 zwei gegenüberliegende Stirnflächen 14, 16 auf. Dabei können die Stirnfläche 14 zum Beispiel mit einem Booster oder einem Konverter und die Stirnfläche 16 gegebenenfalls auch mit einem Booster oder einem Konverter verbunden sein. Es ist jedoch nicht erforderlich, dass jede Stirnfläche 14, 16 mit einem Element der Ultraschallschweißvorrichtung verbunden ist. Die Sonotrode 10 weist vorzugsweise eine Länge λ auf, die der Wellenlänge der zu applizierenden Ultraschallschwingung entspricht.

Die Sonotrode 10 besteht aus zylindrischen Endabschnitten 18, 20 und einem Mittelabschnitt 22, der sich seinerseits aus äußeren ersten trapezoidförmigen Abschnitten 24, 26 und inneren zweiten trapezoidförmigen Abschnitten 28, 30 zusammensetzt, die ihrerseits einen quaderförmigen Innenabschnitt 32 begrenzen, dessen diametral gegenüberliegende Stirnflächen 34, 36 die Arbeitsflächen der Sonotrode 10 bilden. Dabei wird jede Stirn- oder Arbeitsfläche 34, 36 doppelt genutzt dadurch, dass die Sonotrode 10 um ihre Querachse (Pfeil 38) drehbar ist (Pfeil 40). Hierdurch ergibt sich eine optimale Nutzung der jeweiligen Arbeitsfläche 34 bzw. 36, die folglich die Funktion von jeweils zwei Arbeitsflächen ausüben. Des Weiteren kann wahlweise eine der Arbeitsflächen 34 bzw. 36 auf eine nicht dargestellte Gegenelektrode ausgerichtet werden, indem die Sonotrode 10 um ihre Längsachse (Pfeil 40) drehbar ist, wie durch den Pfeil 44 angedeutet werden soll.

Aus der zeichnerischen Darstellung erkennt man des Weiteren, dass die Sonotrode 10 von den Endabschnitten 18, 20 ausgehend in Richtung der Arbeitsflächen 34, 36 in ihrer Höhe zunimmt, wohingegen die Breite zumindest in den äußeren und inneren trapezoidförmigen Abschnitten 24, 26 bzw. 28, 30 geringer als die der Endabschnitte 18, 20 ist.

Mit anderen Worten ist der Mittelabschnitt 22 zumindest im Bereich der inneren trapezoidförmigen Abschnitte 28, 30 sowie des Innenabschnitts 32 als plattenförmig zu bezeichnen, wohingegen die Endabschnitte 18, 20 eine Zylinderform aufweisen. Den Übergang zwischen dem plattenförmigen Abschnitt und den Endabschnitten 18, 20 bilden die äußeren ersten trapezoidförmigen Abschnitte 24.

Des Weiteren verdeutlicht die zeichnerische Darstellung der Fig. 1, dass die Sonotrode 10 symmetrisch in Bezug auf zwei Ebenen ausgebildet ist. Dabei verläuft eine Ebene senkrecht zur Querachse 38. In dieser Ebene liegt die Längsachse 42. In der anderen Ebene liegt die Querachse 38, zu der die Längsachse 42 sich vertikal erstreckt.

Weist die Sonotrode 10 im Ausführungsbeispiel zwei paarweise gegenüberliegende Arbeitsflächen 34, 36 auf, so besteht ohne Weiteres die Möglichkeit, den Innenabschnitt 32 z. B. sternförmig auszubilden, so dass zum Beispiel vier Paar Arbeitsflächen zur Verfügung gestellt werden können.

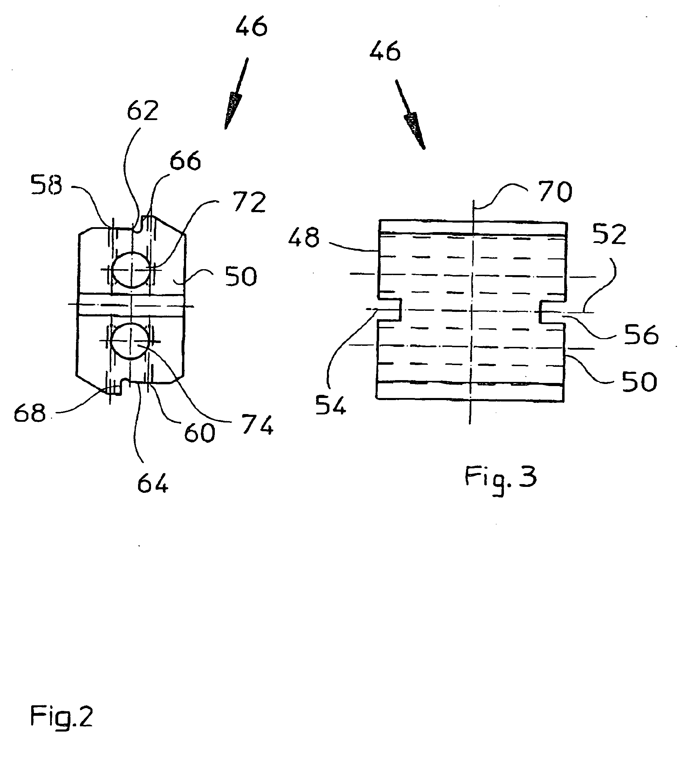

In den Fig. 2 und 3 ist ein Werkzeug in Form einer Gegenelektrode - auch Amboss 46 genannt - dargestellt, das insbesondere zum Abdichten bzw. Verschweißen und Abtrennen von Rohren zum Beispiel der Kühltechnik bestimmt ist. Der Amboss 46 weist zwei Stirnflächen 48, 50 auf, die wahlweise an einer Befestigungsfläche einer Ultraschallschweißvorrichtung anliegen. Zur eindeutigen Fixierung der jeweiligen Stirnfläche 48 oder 50 an einer Befestigungsfläche weist diese eine über die gesamte Breite verlaufende und von Längsachse 52 des Amboss 46 durchsetzte im Schnitt rechteckförmige Aussparung 54, 56 auf, in die bei ordnungsgemäßer Ausrichtung des Ambosses 46 auf die Befestigungsfläche ein entsprechend angepasster Vorsprung der Befestigungsfläche eingreift.

Auf in Bezug auf die Längsachse 52 diametral gegenüberliegenden Seiten des Ambosses 46 sind Arbeitsflächen 58, 60 vorhanden, die entlang innerer Längsseite 62, 64 jeweils von einer Schneidkante 66, 68 begrenzt sind, die parallel oder in etwa parallel zur Längsachse 52 des Ambosses 46 und somit entlang der Längsachse einer nicht dargestellten und dem Amboss 46 zuzuordnenden Sonotrode verläuft.

Durch die diesbezügliche Konstruktion von Arbeitsfläche 58 bzw. 60 und zugeordneter Schneidkante 66, 68 besteht die Möglichkeit, ein Rohr abzudichten bzw. zu verschweißen und gleichzeitig abzuscheren bzw. abzutrennen.

Der Amboss 46 ist nicht nur um seine Längsachse 52, sondern auch um seine senkrecht zur Längsachse 52 verlaufende Querachse 70 drehbar, so dass jede der Arbeitsflächen 58, 60 doppelt nutzbar ist, also jede Arbeitsfläche 58, 60 die Funktion von zwei Arbeitsflächen ausübt. Gleichzeitig ergibt sich der Vorteil, dass der Amboss 46 genutzt werden kann, um wahlweise ein zu verdichtendes Rohr links oder rechts abzutrennen. So erfolgt eine Trennung stets von der gleichen Seite, wenn der Amboss 46 allein um seine Längsachse 52 gedreht wird. Erfolgt dagegen ein Drehen um die Querachse 70, kann anstelle eines Linksabtrennens ein Rechtsabtrennen eines Rohres erfolgen und umgekehrt.

Im Ausführungsbeispiel erfolgt das Befestigen des Ambosses 46 mit der Befestigungsfläche über Schrauben, die in Bohrungen 72, 74 verlaufen, die symmetrisch zur Längsachse 52 positioniert sind.

## Patentansprüche

1. Verwendung einer eine Längsachse (42) und senkrecht zu dieser verlaufenden Querachse (38) aufweisenden mit einer Halterung, einem Booster oder einem Konverter der Ultraschallschweißvorrichtung verbundenen Sonotrode (10) mit zwei gegenüberliegenden Stirnflächen (14, 16), sowie zwei zwischen den Stirnflächen und in Bezug auf die Längsachse der Sonotrode auf diametral gegenüberliegenden Seiten verlaufenden Flächen (34, 36), von denen eine durch Drehen der Sonotrode um ihre Längsachse auf eine Gegenelektrode (46) der Ultraschallschweißvorrichtung ausgerichtet wird, zwischen denen ein zu verschweißendes Gut angeordnet wird, wobei die Sonotrode sowohl um ihre Längsachse (42) als auch um ihre die Flächen durchsetzende Querachse (38) drehbar ausgebildet ist.
**dadurch gekennzeichnet,**
**dass** jede Fläche (34, 36) als zwei Arbeitsflächen ausgebildet ist, die sich überlappen, und dass eine der zum Verschweißen zu nutzenden Arbeitsflächen dadurch zur Verfügung gestellt wird, dass die Sonotrode (10) durch Drehung um ihre Querachse (38) umgesetzt wird, so dass jede Fläche (34, 36) doppelt genutzt wird.

2. Verwendung nach Anspruch 1,
**dadurch gekennzeichnet,**
**dass** die Sonotrode (10) als das Werkzeug aus die Stirnflächen (14, 16) aufweisenden zylindrischen Endabschnitten (18, 20) und zwischen diesen verlaufendem Mittelabschnitt (32) besteht, dass der Mittelabschnitt symmetrisch zu einer die Flächen (34, 36) schneidenden Ebene verlaufende äußere erste und innere zweite trapezoidförmige Abschnitte (24, 26, 28, 30) umfasst und dass die Flächen von einem von den zweiten trapezoidförmigen Abschnitten begrenzten quaderförmigen Innenabschnitt (32) ausgehen.

3. Verwendung nach Anspruch 2,
**dadurch gekennzeichnet,**
**dass** der Mittelabschnitt (22) der Sonotrode (10) von den Endabschnitten (28) ausgehend in seiner Höhe in Richtung des Innenabschnitts (32) hin zunimmt.

4. Verwendung nach Anspruch 2,
**dadurch gekennzeichnet,**
**dass** jeweilige über die Umfangsflächen sowohl der Endabschnitte (18, 20) als auch des Mittelabschnitts (22) vorstehende Stirnflächen (34, 36) des quaderförmigen Innenabschnitts (32) der Sonotrode (10) die zwei ersten bzw. die zwei zweiten Flächen sind.

5. Verwendung nach zumindest einem der vorhergehenden Ansprüche,
**dadurch gekennzeichnet,**
**dass** zumindest eine der Stimflächen (14, 16) der Sonotrode (10) als das Werkzeug mit einem Booster verbunden ist und dass die Sonotrode eine Länge λ mit λ = Wellenlänge der Ultraschallschwingung aufweist.

6. Verwendung nach zumindest einem der vorhergehenden Ansprüche,
**dadurch gekennzeichnet,**
**dass** eine der Stirnflächen (14, 16) der Sonotrode (10) als das Werkzeug mit einem Booster und die andere Stirnfläche mit einem Konverter der Ultraschallschweißvorrichtung verbunden ist.

7. Verwendung nach zumindest einem der vorhergehenden Ansprüche,
**dadurch gekennzeichnet,**
**dass** jede Stirnfläche (14, 16) der Sonotrode (10) als das Werkzeug mit einem Konverter verbunden ist und die Sonotrode eine Länge λ oder 3/2 λ mit λ = Wellenlänge der Ultraschallschwingung aufweist.

8. Verwendung nach zumindest einem der vorhergehenden Ansprüche,
**dadurch gekennzeichnet,**
**dass** die Sonotrode (10) symmetrisch sowohl zu einer ersten Ebene, die senkrecht zu der Querachse (38) der Sonotrode verläuft und in der die Längsachse (42) liegt, als auch zu einer zweiten Ebene ausgebildet ist, die senkrecht zur Längsachse verläuft und in der die Querachse liegt.

## Claims

1. Use of a sonotrode (10) connected to a holder, booster, or converter of an ultrasonic welding machine, said sonotrode having a longitudinal axis (42) and a transverse axis (38) running perpendicular thereto and two opposing end faces (14, 16), as well as two surfaces (34, 36) running between said end faces and relative to the longitudinal axis of the sonotrode on diametric sides, one of said surfaces being aligned to a counter electrode (46) of the ultrasonic welding machine by rotating the sonotrode about its longitudinal axis, between which a deposit to be welded is arranged, whereby the sonotrode is designed so as to be rotatable about both its longitudinal axis (42) and its transverse axis (38) passing through the surfaces,
**characterized in**
**that** each surface (34, 36) is designed as two working surfaces, which overlap each other, and that one of the working surfaces used for welding is provided in that the sonotrode (10) is shifted by rotating about its transverse axis (38) so that each surface (34, 36) is used double.

2. Use according to claim 1,
**characterized in**
**that** the sonotrode (10) as the tool has cylindrical end sections (18, 20) having the end faces (14, 16) and a central section (22) running between these, that the central section comprises outer first and inner second trapezoidal sections (24, 26, 28, 30) running symmetrical to a plane that intersects the surfaces (34, 36), and that the surfaces originate form a cuboid inner section (32) delimited by the second trapezoidal sections.

3. Use according to claim 2,
**characterized in**
**that** the central section (22) of the sonotrode (10) increases in height starting at the end sections (28) in the direction toward the inner section (32).

4. Use according to claim 2,
**characterized in**
**that** respective end faces (34, 36) of the cuboid inner section (32) of the sonotrode (10) projecting over the peripheral surfaces of the end sections (18, 20) as well as also of the central section (22) are the two first, respectively the two second surfaces.

5. Use according to at least one of the preceding claims,
**characterized in**
**that** at least one of the end faces (14, 16) of the sonotrode (10) as the tool is connected to a booster, and that the sonotrode has a length λ with λ = wavelength of the ultrasonic vibration.

6. Use according to at least one of the preceding claims,
**characterized in**
**that** one of the end faces (14, 16) of the sonotrode (10) as the tool is connected to a booster, and that the other end face is connected to a converter of the ultrasonic welding machine.

7. Use according to at least one of the preceding claims,
**characterized in**
**that** each end face (14, 16) of the sonotrode (10) as the tool is connected to a converter, and the sonotrode has a length λ or 3/2 λ, with λ = wavelength of the ultrasonic vibration.

8. Use according to at least one of the preceding claims,
**characterized in**
**that** the sonotrode (10) is designed so as to be symmetrically with respect to a first plane, which runs perpendicular to the transverse axis (38) of the sonotrode and in which the longitudinal axis (42) lies, as well as with respect to a second plane, which runs perpendicular to the longitudinal axis and in which the transverse axis lies.

## Revendications

1. Utilisation d'une sonotrode (10) reliée à un booster ou à un convertisseur d'une soudeuse à ultrasons, ladite sonotrode présentant un axe longitudinal (42) et un axe transversal (38) perpendiculaire à celui-ci et deux faces frontales opposées (14, 16), ainsi que deux faces (34, 36) s'étendant sur les côtés diamétralement opposées par rapport à l'axe longitudinal de la sonotrode, dont l'une est orientée sur une contrélectrode (46) de la soudeuse à ultrasons par pivotement de la sonotrode autour de son axe longitudinal, et entre lesquelles est placé un produit à souder, sachant que la sonotrode est conçue de manière à pouvoir pivoter autour de son axe longitudinal (42) ainsi que de l'axe transversal (38) traversant les faces,
**caractérisée en ce**
**que** chaque face (34, 36) est conçue en tant que deux surfaces de travail qui se chevauchent, et qu'une des surfaces de travail devant être utilisée pour souder est mise à disposition par le fait que la sonotrode (10) est déplacée par pivotement autour de son axe transversal (38) de sorte que chaque face (34, 36) est doublement utilisée.

2. Utilisation selon la revendication 1,
**caractérisée en ce**
**que** la sonotrode (10) en tant qu'outil est constituée des parties terminales cylindriques (18, 20) présentant des faces frontales (14, 16), et d'une partie médiane (32) s'étendant entre elles, que la partie médiane comprend, s'étendant symétriquement à un plan coupant les faces (34, 36), des premières parties extérieures et des secondes parties intérieures trapézoèdres (24, 26, 28, 30), et que les faces partent d'une partie intérieure parallélépipédique (32) délimitée par une des secondes parties trapézoèdres.

3. Utilisation selon la revendication 2,
**caractérisée en ce**
**que** la hauteur de la partie médiane (22) de la sonotrode (10) augmente à partir des parties terminales (28) en direction de la partie intérieure (32).

4. Utilisation selon la revendication 2,
**caractérisée en ce**
**que** les faces frontales (34, 36) respectives de la partie intérieure parallélépipédique (32) de la sonotrode (10) faisant saillie sur les faces circonférentielles des parties terminales (18, 20) ainsi que de la partie médiane (22) sont les deux premières et les deux secondes faces.

5. Utilisation selon au moins une des revendications précédentes,
**caractérisée en ce**
**qu'**au moins une des faces frontales (14, 16) de la sonotrode (10) en tant qu'outil est reliée à un booster et que la sonotrode présente une longueur λ où λ = longueur d'onde de la vibration ultrasonore.

6. Utilisation selon au moins une des revendications précédentes,
**caractérisée en ce**
**qu'**une des faces frontales (14, 16) de la sonotrode (10) en tant qu'outil est reliée à un booster et l'autre face frontale est reliée à un convertisseur de la soudeuse à ultrasons.

7. Utilisation selon au moins une des revendications précédentes,
**caractérisée en ce**
**que** chaque face frontale (14, 16) de la sonotrode (10) en tant qu'outil est reliée à un convertisseur et que la sonotrode présente une longueur λ ou 3/2λ où λ = longueur d'onde de la vibration ultrasonore.

8. Utilisation selon au moins une des revendications précédentes,
**caractérisée en ce**
**que** la sonotrode (10) est conçue symétriquement par rapport à un premier plan orthogonal à l'axe transversal (38) de la sonotrode et dans lequel se situe l'axe longitudinal (42), ainsi que par rapport à un second plan orthogonal à l'axe longitudinal et dans lequel se situe l'axe transversal.
